# EUROPÄISCHE PATENTSCHRIFT

(11) **EP 2 094 101 B1**
(45) Veröffentlichungstag und Bekanntmachung des Hinweises auf die Patenterteilung: **18.11.2015**
(21) Anmeldenummer: 07816170.0
(22) Anmeldetag: 27.09.2007
(51) Int. Cl.: A23G 1/00, A23G 1/21, A23G 1/20, A23P 1/10, A23L 1/00

(54) **VORRICHTUNG UND VERFAHREN ZUM HERSTELLEN SCHALENARTIGER VERZEHRGÜTER**
DEVICE AND METHOD FOR PRODUCING BOWL-SHAPED FOOD PRODUCTS
DISPOSITIF ET PROCÉDÉ DE FABRICATION D'ARTICLES CONSOMMABLES EN FORME DE COQUILLE

(30) Priorität: 27.11.2006 DE 102006056262
(43) Veröffentlichungstag der Anmeldung: 02.09.2009
(73) Patentinhaber: Bühler AG, 9240 Uzwil (CH)
(72) Erfinder: KRISCHER, Achim, 51688 Wipperfürth (DE)
(74) Vertreter: Wilming, Martin
(86) Internationale Anmeldenummer: PCT/CH2007/000478
(87) Internationale Veröffentlichungsnummer: WO 2008/064499

(56) Entgegenhaltungen:
- EP-A- 0 715 813
- EP-A- 1 125 499
- DE-C- 958 263

## Beschreibung

Die Erfindung bezieht sich auf eine Vorrichtung gemäss der Oberbegriff von Anspruch 1 bzw. auf ein Verfahren gemäss dem Oberbegriff von Anspruch 22 oder 23 zur Herstellung schalenartig geformter Verzehrgüter aus einer Fettmasse, insbesondere aus einer kakaohaltigen bzw. schokoladeartigen Fettmasse.

Derartige bekannte Vorrichtungen und Verfahren weisen einen Mangel an Flexibilität der Fertigungslinie beim Umstellen der Produktion auf ein anderes Verzehrgut auf. Ausserdem sind derartige Produktwechsel nicht nur zeitraubend, sondern stellen auch Anforderungen an die Fachkenntnis des Bedienpersonals dar.

Derartige Vorrichtung und Verfahren sind beispielsweise aus EP 0715813 A1 bakannt.

Der Erfindung liegt die Aufgabe zugrunde, diese Nachteile der eingangs genannten bekannten Vorrichtungen und Verfahren zu lösen.

Diese Aufgabe wird vorrichtungsmässig gemäss Anspruch 1 gelöst.

Erfindungsgemäss ist das Stempelblock-Trägergestell als -Stempelblock-Wechselgestell ausgebildet, an dem mehrere Stempelblöcke bezüglich des Wechselgestells verfahrbar gelagert sind und jeder der Stempelblöcke bezüglich des Wechselgestells zwischen einer Betriebsstellung, in der er beim Absenken des Stempelblock-Wechselgestells gegen den Formenblock an der Formgebung der Verzehrgüter mitwirkt, und einer Nicht-Betriebsstellung, in der er beim Absenken des Stempelblock-Wechselgestells gegen den Formenblock an der Formgebung der Verzehrgüter nicht mitwirkt, verfahrbar ist.

Die Aufgabe wird verfahrensmässig gemäss Anspruch 22 und/oder 23 gelöst.

Erfindungsgemäss erfolgt dies durch Auswählen eines der mehreren Stempelblöcke; und Verwenden des ausgewählten Stempelblocks für mindestens einen Schrittzyklus, der den Schritt a), den Schritt b) und den Schritt c) aufweist, und/oder Auswählen eines der mehreren Stempelblock-Wechselgestelle; und Verwenden des ausgewählten Stempelblock-Wechselgestells für mindestens einen Schrittzyklus, der den Schritt a), den Schritt b) und den Schritt c) aufweist.

Weitere vorteilhafte Ausführungen der Erfindung sind in den abhängigen Ansprüchen definiert.

Weitere Vorteile, Merkmale und Anwendungsmöglichkeiten der Erfindung ergeben sich aus der nun folgenden, nicht einschränkend aufzufassenden Beschreibung anhand der Zeichnung, wobei
- Fig. 1: eine erste Baugruppe der erfindungsgemässen Vorrichtung gemäss einer bevorzugten Ausführung der Erfindung ist;
- Fig. 2: eine mehrere der ersten Baugruppen der Fig. 1 enthaltende zweite Baugruppe der erfndungsgemässen Vorrichtung gemäss einer bevorzugten Ausführung der Erfindung ist.

Die Erfindung betrifft ein Verfahren und eine Vorrichtung zur Herstellung von Schokoladenartikeln, insbesondere von Hülsen für Schokoladenhohlkörper, bei dem flüssige Schokoladenmasse vorgebbarer Menge in eine in einer Form ausgebildeten Alveole dosiert wird und anschließend ein Stempelelement in die Schokolade eingetaucht und nach Ablauf einer vorgegebenen Verweildauer wieder entfernt wird. Dabei kann das Stempelelement alternativ eine vertikale Bewegung ausführen oder die Form mit geeigneten Mitteln unter das Stempelelement gehoben werden. Zum Einsatz können dabei sowohl feststehende Stempel (gefräste Stempelplatte) als auch nachgiebige, federnde Stempel kommen.

Zur Optimierung des Verfahrens bzw. der Vorrichtung hinsichtlich der Flexibilität auf Produktwechsel innerhalb einer Schokoladen-Produktionsanlage ist erfindungsgemäß vorgesehen, einen, zwei oder mehrere Stempelblöcke verschiedener Ausprägung auf ein Wechselgestell zu montieren, so dass ein Produktwechsel auch werkzeuglos innerhalb kürzester Zeit ermöglicht wird.

### Beispiel:

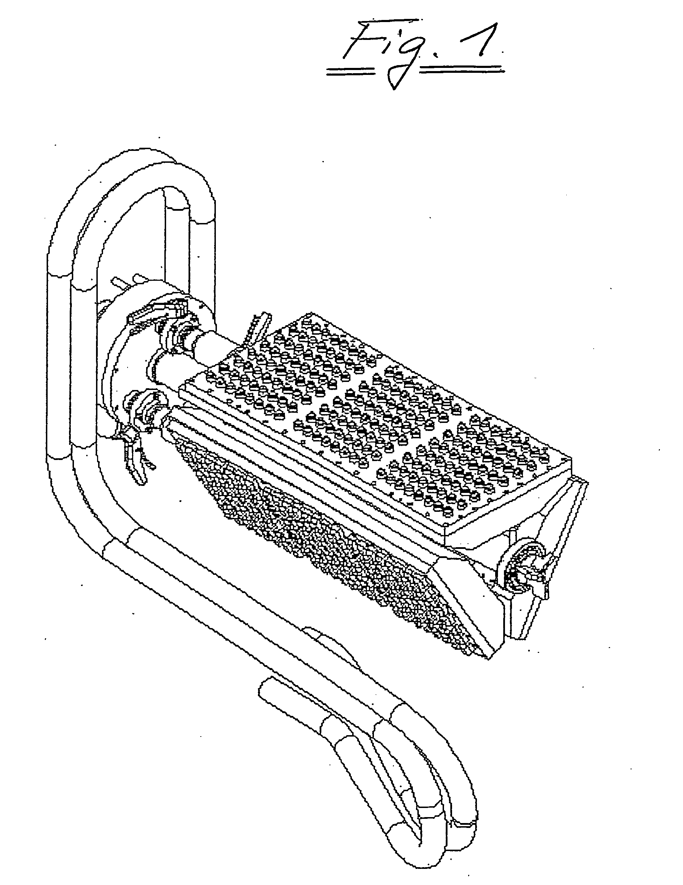

Eine sternförmige Anordnung mit drei Stempelblöcken (siehe Fig. 1) auf dem Wechselgestell ermöglicht durch händisches, pneumatisches oder motorisches Schwenken (hier ±120°) über eine horizontale Achse orthogonal zur Transportrichtung ohne große Umbauzeit einen Produktwechsel zwischen drei verschiedenen Produkten.

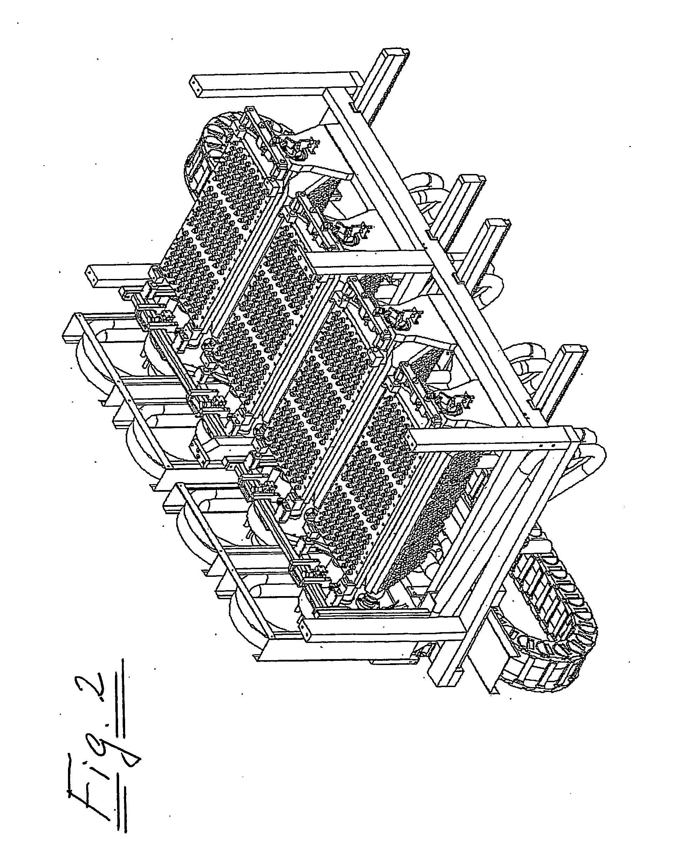

Diese Wechselgestelle können alternativ in einem feststehenden Hauptgestell für niedrige Anlagengeschwindigkeiten oder mehrfach hintereinander in einem verfahrbaren Hauptgestell angeordnet sein (siehe Fig. 2), um kürzere Maschinentaktzeiten zu ermöglichen. Bei Verwendung mehrerer Wechselgestelle bei höheren Geschwindigkeiten müssen diese mit der Bewegung des Formentransports mitgeführt werden, um eine ausreichende Stempelzeit zu ermöglichen und den hinreichenden Wärmeentzug aus der Schokolade zu ermöglichen. Durch das Mitfahren des Hauptgestells sind Stempelzeiten zu erreichen, die länger als eine Taktzeit andauern Bei zwei Wechselgestellen in einem Hauptgestell kann das Hauptgestell einen Maschinentakt zum Stempeln nutzen und dabei synchron mit dem Formentransport mitfahren, danach bleibt ein Taktzyklus, um in die Ausgangslage zurückzukehren. Für noch höhere Anlagengeschwindigkeiten bietet sich ein Wechselgestellsystem mit vier Wechselgestellen an. Hier fährt das Hauptgestell zwei Takte mit, und es verbleiben zwei Takte für das Zurückfahren in die Ausgangsstellung. Anordnungen mit ungerader Wechselgestellanzahl bieten sich nur bei nicht getakteten, kontinuierlich laufenden Formentransporten an, weil hier für den Anfang und das Ende des Stempels keine Rücksicht auf Stillstandspositionen der Formen gelegt werden muss.

Die Anordnung mehrerer Wechselgestelle hintereinander kann bei geeigneter Peripherie und langsamen Taktraten auch die gleichzeitige Produktion verschiedener Artikel ohne Unterbrechung der Produktion ermöglichen. Auch die Drehung des Wechselgestells von Form zu Form ist eine Option.

Die Erfindung zeichnet sich dadurch aus, dass durch die beschriebene Konfiguration ein Wechsel der Stempelblöcke durch eine geeignete Vorrichtung vorgenommen wird und dadurch weit weniger Fachkenntnis des Bedienpersonals vorausgesetzt werden muss als bei bisherigen Systemen. Der wichtigere, zweite Punkt ist die Zeitersparnis beim Umstellen von Produkten. Der resultierende Hauptvorteil ist die wesentliche Verbesserung der Flexibilität der Fertigungslinie bezüglich der Umstellung von Produkten.

## Patentansprüche

1. Vorrichtung zur Herstellung schalenartig geformter Verzehrgüter aus einer Fettmasse, insbesondere einer kakaohaltigen bzw. schokoladeartigen Fettmasse, wobei die Vorrichtung die folgenden Mittel aufweist:
▪ eine Vielzahl mit der Fettmasse im fliessfähigen temperierten Zustand befüllbarer Hohlformen, die als Vertiefungen in einem Formenblock ausgebildet sind, wobei die innenfläche einer jeweiligen Hohlform die Aussenfläche eines herzustellenden schalenartigen Verzehrgutes bestimmt;
▪ eine Vielzahl von Stempelelementen, die als Ausbuchtungen an einem Stempelblock in einem Stempelblock-Trägergestell ausgebildet sind, das derart beweglich gelagert ist, dass der Stempelblock im Betrieb gegen den Formenblock absenkbar ist, wobei jeweils ein Stempelelement des Stempeiblocks in jeweils eine der Hohlformen des Formenblocks absenkbar ist; und
▪ wobei die Aussenfläche eines jeweiligen Stempelelements die Innenfläche des herzustellenden schalenartigen Verzehrgutes bestimmt;
**dadurch gekennzeichnet, dass** das Stempelblock-Trägergestell als Stempelblock-Wechselgestell ausgebildet ist, an dem mehrere Stempelblöcke bezüglich des Wechselgestells verfahrbar gelagert sind und jeder der Stempelblöcke bezüglich des Wechselgestells zwischen einer Betriebsstellung, in der er beim Absenken des Stempelblock-Wechselgestells gegen den Formenblock an der Formgebung der Verzehrgüter mitwirkt, und einer Nicht-Betriebsstellung, in der er beim Absenken des Stempelblock-Wechselgestells gegen den Formenblock an der Formgebung der Verzehrgüter nicht mitwirkt, verfahrbar ist.

2. Vorrichtung nach Anspruch 1, **dadurch gekennzeichnet, dass** die mehreren Stempelblöcke bezüglich des Wechselgestells verschiebbar gelagert sind und jeder der Stempelblöcke zwischen der Betriebsstellung und der Nicht-Betriebsstellung verschiebbar ist.

3. Vorrichtung nach Anspruch 1, **dadurch gekennzeichnet, dass** die mehreren Stempelblöcke bezüglich des Wechselgestells verdrehbar gelagert sind und jeder der Stempelblöcke zwischen der Betriebsstellung und der Nicht-Betriebsstellung verdrehbar ist.

4. Vorrichtung nach Anspruch 3, **dadurch gekennzeichnet, dass** das Wechselgestell ein um eine Drehachse drehbares Drehgestell ist, an dem die mehreren Stempelblöcke mit nach aussen von der Drehachse weg weisenden Stempelelementen entlang der Umfangsrichtung winkelmässig versetzt gelagert sind.

5. Vorrichtung nach Anspruch 4, bei welcher die mit den Vertiefungen versehene Oberfläche des Formenblocks eine Ebene ist, wobei der obere Begrenzungsrand einer Vertiefung eine in der Ebene des Formenblocks liegende geschlossene Kurvenlinie ist, und bei welcher die mit den Ausbuchtungen versehene Oberfläche des Stempelblocks eine Ebene ist, wobei die untere Sockellinie einer Ausbuchtung eine in der Ebene des Stempelblocks liegende geschlossene Kurvenlinie ist, **dadurch gekennzeichnet, dass** die Oberflächen-Ebene jedes der entlang der Umfangsrichtung verteilten mehreren Stempelblöcke tangential zu einer die Drehachse konzentrisch umgebenden gedachten Zylindermantelfläche ausgerichtet ist.

6. Vorrichtung nach Anspruch 5, **dadurch gekennzeichnet, dass** die nach aussen weisenden Stempelblock-Ebenen des Drehgestells die Mantelfläche eines Prismas mit polygonförmiger Basis definieren.

7. Vorrichtung nach Anspruch 6, **dadurch gekennzeichnet, dass** das Prisma ein regelmässiges Prisma mit regelmässiger polygonförmige Basis ist.

8. Vorrichtung nach Anspruch 7, **dadurch gekennzeichnet, dass** das Prisma ein Dreiecks-Prisma mit einem regelmässigen bzw. gleichseitigen Dreieck als Basis ist.

9. Vorrichtung nach Anspruch 7, **dadurch gekennzeichnet, dass** das Prisma ein Quadrat-Prisma mit quadratischer Basis ist.

10. Vorrichtung nach einem der vorhergehenden Ansprüche, **dadurch gekennzeichnet, dass** die mehrere Stempelblöcke bezüglich des Wechselgestells manuell verfahrbar sind.

11. Vorrichtung nach einem der vorhergehenden Ansprüche, **dadurch gekennzeichnet, dass** die mehrere Stempelblöcke bezüglich des Wechselgestells pneumatisch verfahrbar sind.

12. Vorrichtung nach einem der vorhergehenden Ansprüche, **dadurch gekennzeichnet, dass** die mehrere Stempelblöcke bezüglich des Wechselgestells hydraulisch verfahrbar sind.

13. Vorrichtung nach einem der vorhergehenden Ansprüche, **dadurch gekennzeichnet, dass** die mehrere Stempelblöcke bezüglich des Wechselgestells durch einen Elektromotor verfahrbar sind.

14. Vorrichtung nach einem der vorhergehenden Ansprüche, **dadurch gekennzeichnet, dass** in der Betriebsstellung und in der Nicht-Betriebsstellung die Stempelblöcke jeweils in einer Einraststellung sind bzw. das Wechselgestell, insbesondere das Drehgestell, in einer Einraststellung ist.

15. Vorrichtung nach einem der vorhergehenden Ansprüche, **dadurch gekennzeichnet, dass** die Stempelblöcke und ihre Stempelelemente kühlbar sind.

16. Vorrichtung nach Anspruch 15, **dadurch gekennzeichnet, dass** die Stempelblöcke und/oder ihre Stempelelemente von einem Kühlfluid, insbesondere von gekühlter Luft, umströmbar sind.

17. Vorrichtung nach Anspruch 15 oder 16, **dadurch gekennzeichnet, dass** die Stempelblöcke und/oder ihre Stempelelemente von einem Kühlfluid, insbesondere von gekühltem Wasser, durchströmbar sind.

18. Vorrichtung nach einem der vorhergehenden Ansprüche, **dadurch gekennzeichnet, dass** die mehreren Stempelblöcke sich voneinander unterscheiden.

19. Vorrichtung nach Anspruch 18, **dadurch gekennzeichnet, dass** sich die Stempelblöcke in ihrer Kühlleistung unterscheiden.

20. Vorrichtung nach Anspruch 18 oder 19, **dadurch gekennzeichnet, dass** die mehreren Stempelblöcke sich in der Anzahl und/oder Gestalt ihrer Stempelelemente nunterscheiden.

21. Vorrichtung nach einem der Ansprüche 1 bis 20, **dadurch gekennzeichnet, dass** sie mehrere Stempelblock-Wechselgestelle aufweist.

22. Verfahren zur Herstellung eines schalenartig geformten Verzehrgutes aus einer Fettmasse, insbesondere einer kakaohaltigen bzw. schokoladeartigen Fettmasse, wobei eine Vorrichtung gemäss einem der Ansprüche 1 bis 21 verwendet wird, wobei das Verfahren die folgenden Schritte eines Schrittzyklusses aufweist:
a) dosiertes Befüllen einer die Aussenfläche des schalenartigen Verzehrgutes bestimmenden Hohlform mit der Fettmasse im fliessfähigen temperierten Zustand, wobei die Temperatur der Hohlform unterhalb der Temperatur der temperierten Fettmasse liegt;
b) Eintauchen eines die Innenfläche des schalenartigen Verzehrgutes bestimmenden Stempelelements in die fliessfähige temperierte Fettmasse in der Schale, wobei die Temperatur des Stempelelements ebenfalls unterhalb der Temperatur der temperierten Fettmasse liegt, so dass sich die noch fliessfähige Fettmasse in dem Zwischenraum zwischen Hohlform und Stempelelement verteilt;
c) Halten des Stempelelements in seiner in der Fettmasse eingetauchten Stellung über eine bestimmte Zeitdauer, bis die Fettmasse in dem Zwischenraum erstarrt ist,
**gekennzeichnet durch**
d) Auswählen eines der mehreren Stempelblöcke; und
e) Verwenden des ausgewählten Stempelblocks für mindestens einen Schrittzyklus, der den Schritt a), den Schritt b) und den Schritt c) aufweist.

23. Verfahren zur Herstellung eines schalenartig geformten Verzehrgutes aus einer Fettmasse, insbesondere einer kakaohaltigen bzw. schokoladeartigen Fettmasse, wobei eine Vorrichtung gemäss Anspruch 21 verwendet wird, wobei das Verfahren die folgenden Schritte eines Schattzyklusses aufweist:
a) dosiertes Befüllen einer die Aussenfläche des schalenartigen Verzehrgutes bestimmenden Hohlform mit der Fettmasse im fliessfähigen temperierten Zustand, wobei die Temperatur der Hohlform unterhalb der Temperatur der temperierten Fettmasse liegt;
b) Eintauchen eines die Innenfläche des schalenartigen Verzehrgutes bestimmenden Stempelelements in die fliessfähige temperierte Fettmasse in der Schale, wobei die Temperatur des Stempelelements ebenfalls unterhalb der Temperatur der temperierten Fettmasse liegt, so dass sich die noch fliessfähige Fettmasse in dem Zwischenraum zwischen Hohlform und Stempelelement verteilt;
c) Halten des Stempelelements in seiner in der Fettmasse eingetauchten Stellung über eine bestimmte Zeitdauer, bis die Fettmasse in dem Zwischenraum erstarrt ist,
**gekennzeichnet durch**
d) Auswählen eines der mehreren Stempelblock-Wechselgestelle: und
e) Verwenden des ausgewählten Stempelblock-Wechseigestells für mindestens einen Schrittzyklus, der den Schritt a), den Schritt b) und den Schritt c) aufweist.

24. Verfahren nach Anspruch 22 oder 23, **dadurch gekennzeichnet, dass** das Verwenden eines ausgewählten Stempelblocks bzw. eines ausgewählten Wechselgestells über mehrere Schrittzyklen erfolgt.

## Claims

1. An apparatus for producing bowl-shaped food products from a fat compound, especially a cocoa-containing or chocolate like fat compound, with the apparatus having the following means:
- a plurality of hollow molds which can be filled with the fat compound in the free-**flowing tempered state and which are arranged as depressions in a block of** molds, with the inside surface of the respective hollow mold determining the outside surface of a bowl-shaped food product to be produced;
- a plurality of die elements which are arranged as outward bulges on a die block in a support frame for the die block which is movably held in such a way that the die block can be lowered in operation against the mold block, with one die element of the die block being lowerable into one each of the hollow molds of the mold block, and
- with the outside surface of a respective die element determining the inside surface of the bowl-shaped food product to be produced,
**characterized in that** the die-block support frame is arranged as a die-block interchangeable frame on which several die blocks are held so as to be movable relative to the interchangeable frame and each of the die blocks is movable relative to the interchangeable frame between an operating position in which it cooperates in the shaping of the food products during the lowering of the die-block interchangeable frame against the mold block and a non-operating position in which it does not cooperate in the shaping of the food products during the lowering of the die-block interchangeable frame against the mold block.

2. An apparatus according to claim 1, **characterized in that** the several die blocks are held in a displaceable manner with respect to the interchangeable frame and each of the die blocks is displaceable between the operating position and the non-operating position.

3. An apparatus according to claim 1, **characterized in that** the several die blocks are held in a rotatable way with respect to the interchangeable frame and each of the die blocks is rotatable between the operating position and the non-operating position.

4. An apparatus according to claim 3, **characterized in that** the interchangeable frame is a rotatable frame which is rotatable about a rotational axis and on which the several die blocks with the stamp elements protruding outwardly from the rotational axis are held in an angular offset manner along the circumferential direction.

5. An apparatus according to claim 4, wherein the surface of the mold block provided with the depressions is a plane, with the upper boundary edge of a depression being a closed curve line disposed in the plane of the mold block, and wherein the surface of the die block provided with the outward bulges being a plane, with the bottom base line of an outward bulge being a closed curve line disposed in a plane of the die block, **characterized in that** the surface plane of each of the several die blocks distributed along the circumferential direction is aligned tangentially to an imaginary cylindrical jacket surface enclosing the rotational axis in a concentric manner.

6. An apparatus according to claim 5, **characterized in that** the outwardly facing dieblock planes of the rotary frame define the jacket surface of a prism with a polygonal base.

7. An apparatus according to claim 6, **characterized in that** the prism is a regular prism with a regular polygonal base.

8. An apparatus according to claim 7, **characterized in that** the prism is a triangular prism with a regular or equilateral triangle as a base.

9. An apparatus according to claim 7, **characterized in that** the prism is a square prism with a square base.

10. An apparatus according to one of the preceding claims, **characterized in that** the several die blocks are manually displaceable relative to the interchangeable frame.

11. An apparatus according to one of the preceding claims, **characterized in that** the several die blocks are pneumatically displaceable relative to the interchangeable frame.

12. An apparatus according to one of the preceding claims, **characterized in that** the several die blocks are hydraulically displaceable relative to the interchangeable frame.

13. An apparatus according to one of the preceding claims, **characterized in that** the several die blocks are displaceable by means of an electromotor relative to the interchangeable frame.

14. An apparatus according to one of the preceding claims, **characterized in that** in the operating position and in the non-operating position the die blocks are each in a latched position and the interchangeable frame, especially the rotary frame, is in a latched position.

15. An apparatus according to one of the preceding claims, **characterized in that** the die blocks and their die elements can be cooled.

16. An apparatus according to claim 15, **characterized in that** a cooled fluid, especially cooled air, flows around the die blocks and/or their die elements.

17. An apparatus according to claim 15 or 16, **characterized in that** a cooling fluid, especially cooled water, flows through the die blocks and/or their die elements.

18. An apparatus according to one of the preceding claims, **characterized in that** the several die blocks differ from each other.

19. An apparatus according to claim 18, **characterized in that** the die blocks differ from each other in their cooling power.

20. An apparatus according to claim 18 or 19, **characterized in that** the several die blocks differ from each other in the number and/or shape of their die elements.

21. An apparatus according to one of the claims 1 to 20, **characterized in that** it comprises several die-block interchangeable frames.

22. A method for producing a bowl-shaped food product from a fat compound, especially from a cocoa-containing or chocolate-like fat compound, by using an apparatus according to one of the claims 1 to 21, which comprises the following steps of a step cycle:
a) metered filling of a hollow mold determining the outside surface of the bowl-shaped food product with the fat compound in the free-flowing tempered state, with the temperature of the hollow mold lying beneath the temperature of the tempered fat compound;
b) submersion of a die element determining the inside surface of the bowl-shaped food product into the free-flowing tempered fat compound in the bowl, with the temperature of the die element also being beneath the temperature of the tempered fat compound, so that the still free-flowing fat compound will be distributed in the intermediate space between hollow mold and die element;
c) holding of the die element in its position submerged in the fat compound over a specific period of time until the fat compound has solidified in the intermediate space,
**characterized by**
d) the selection of one of several of the die blocks, and
e) the use of the selected die block for at least one step cycle which comprises the step a), the step b) and the step c).

23. A method for producing a bowl-shaped food product from a fat compound, especially from a cocoa-containing or chocolate-like fat compound, by using an apparatus according to claim 21, comprising the following steps of a step cycle:
a) metered filling of a hollow mold determining the outside surface of the bowl-shaped food product with the fat compound in the free-flowing tempered state, with the temperature of the hollow mold lying beneath the temperature of the tempered fat compound;
b) submersion of a die element determining the inside surface of the bowl-shaped food product into the free-flowing tempered fat compound in the bowl, with the temperature of the die element also being beneath the temperature of the tempered fat compound, so that the still free-flowing fat compound will be distributed in the intermediate space between hollow mold and die element;
c) holding of the die element in its position submerged in the fat compound over a specific period of time until the fat compound has solidified in the intermediate space,
**characterized by**
d) the selection of one of several of the die-block interchangeable frames, and
e) the use of the selected die-block interchangeable frame for at least one step cycle which comprises the step a), the step b) and the step c).

24. A method according to claim 22 or 23, **characterized in that** the use of a selected die block or a chosen interchangeable frame occurs over several step cycles.

## Revendications

1. Dispositif de fabrication d'articles consommables en forme de coquille à partir d'une masse de graisse, en particulier une masse de graisse contenant du cacao ou de type chocolat, dans lequel le dispositif comprend les moyens suivants:
• une multiplicité de moules creux à remplir avec la masse de graisse à l'état tiède coulant, qui sont réalisés sous forme de cavités dans un bloc de moules, dans lequel la surface intérieure d'un moule creux respectif détermine la surface extérieure d'un article consommable en forme de coquille à fabriquer;
• une multiplicité d'éléments de poinçon, qui sont réalisés sous forme de protubérances sur un bloc de poinçons dans une structure de support du bloc de poinçons, qui est monté de façon mobile, de telle manière que le bloc de poinçons puisse en service être abaissé contre le bloc de moules, dans lequel un élément de poinçon du bloc de poinçons peut être abaissé respectivement dans un des moules creux du bloc de moules; et
• dans lequel la surface extérieure d'un élément de poinçon respectif détermine la surface intérieure de l'article consommable en forme de coquille à fabriquer;
**caractérisé en ce que** la structure de support du bloc de poinçons est réalisée sous la forme d'une structure échangeable de blocs de poinçons, sur laquelle plusieurs blocs de poinçons sont montés de façon déplaçable par rapport à la structure échangeable et chacun des blocs de poinçons est déplaçable entre une position active, dans laquelle il collabore à la formation des articles consommables lors de l'abaissement de la structure échangeable de blocs de poinçons contre le bloc de moules, et une position inactive, dans laquelle il ne collabore pas à la formation des articles consommables lors de l'abaissement de la structure échangeable de blocs de poinçons contre le bloc de moules.

2. Dispositif selon la revendication 1, **caractérisé en ce que** les multiples blocs de poinçons sont montés de façon déplaçable par rapport à la structure échangeable et chacun des blocs de poinçons est déplaçable entre la position active et la position inactive.

3. Dispositif selon la revendication 1, **caractérisé en ce que** les multiples blocs de poinçons sont montés de façon rotative par rapport à la structure échangeable et chacun des blocs de poinçons peut tourner entre la position active et la position inactive.

4. Dispositif selon la revendication 3, **caractérisé en ce que** la structure échangeable est une structure tournante pouvant tourner autour d'un axe de rotation, sur laquelle les multiples blocs de poinçons sont montés en décalage angulaire le long de la direction périphérique avec des éléments de poinçon orientés vers l'extérieur à partir de l'axe de rotation.

5. Dispositif selon la revendication 4, dans lequel la surface du bloc de moules dotée des cavités est un plan, dans lequel le bord de limitation supérieur d'une cavité est une ligne courbe fermée située dans le plan du bloc de moules, et dans lequel la surface du bloc de poinçons munie des protubérances est un plan, dans lequel la ligne de socle inférieure d'une protubérance est une ligne courbe fermée située dans le plan du bloc de poinçons, **caractérisé en ce que** le plan de la surface de chacun des multiples blocs de poinçons répartis le long de la direction périphérique est orienté tangentiellement à une surface latérale cylindrique imaginaire entourant de façon concentrique l'axe de rotation.

6. Dispositif selon la revendication 5, **caractérisé en ce que** les plans de blocs de poinçons de la structure tournante orientés vers l'extérieur définissent la surface latérale d'un prisme à base polygonale.

7. Dispositif selon la revendication 6, **caractérisé en ce que** le prisme est un prisme régulier à base polygonale régulière.

8. Dispositif selon la revendication 7, **caractérisé en ce que** le prisme est un prisme triangulaire avec une base en forme de triangle régulier ou équilatéral.

9. Dispositif selon la revendication 7, **caractérisé en ce que** le prisme est un prisme carré à base carrée.

10. Dispositif selon l'une quelconque des revendications précédentes, **caractérisé en ce que** les multiples blocs de poinçons de la structure échangeable sont déplaçables manuellement.

11. Dispositif selon l'une quelconque des revendications précédentes, **caractérisé en ce que** les multiples blocs de poinçons sont déplaçables par voie pneumatique par rapport à la structure échangeable.

12. Dispositif selon l'une quelconque des revendications précédentes, **caractérisé en ce que** les multiples blocs de poinçons sont déplaçables par voie hydraulique par rapport à la structure échangeable.

13. Dispositif selon l'une quelconque des revendications précédentes, **caractérisé en ce que** les multiples blocs de poinçons sont déplaçables au moyen d'un moteur électrique par rapport à la structure échangeable.

14. Dispositif selon l'une quelconque des revendications précédentes, **caractérisé en ce que**, dans la position active et dans la position inactive, les blocs de poinçons se trouvent respectivement dans une position d'encliquetage ou la structure échangeable, en particulier la structure tournante, se trouve dans une position d'encliquetage.

15. Dispositif selon l'une quelconque des revendications précédentes, **caractérisé en ce que** les blocs de poinçons et leurs éléments de poinçons peuvent être refroidis.

16. Dispositif selon la revendication 15, **caractérisé en ce que** les blocs de poinçons et/ou leurs éléments de poinçons peuvent être balayés par un fluide de refroidissement, en particulier par de l'air refroidi.

17. Dispositif selon la revendication 15 ou 16, **caractérisé en ce que** les blocs de poinçons et/ou leurs éléments de poinçons, peuvent être traversés par un fluide de refroidissement, en particulier par de l'eau refroidie.

18. Dispositif selon l'une quelconque des revendications précédentes, **caractérisé en ce que** les multiples blocs de poinçons se différencient les uns des autres.

19. Dispositif selon la revendication 18, **caractérisé en ce que** les blocs de poinçons se différencient par leur puissance de refroidissement.

20. Dispositif selon la revendication 18 ou 19, **caractérisé en ce que** les multiples blocs de poinçons se différencient par le nombre et/ou la forme de leurs éléments de poinçons.

21. Dispositif selon l'une quelconque des revendications 1 à 20, **caractérisé en ce qu'**il présente plusieurs structures échangeables de blocs de poinçons.

22. Procédé de fabrication d'articles consommables en forme de coquille à partir d'une masse de graisse, en particulier une masse de graisse contenant du cacao ou de type chocolat, dans lequel on utilise un dispositif selon l'une quelconque des revendications 1 à 21, dans lequel le procédé présente les étapes suivantes d'un cycle d'étapes:
a) remplissage dosé d'un moule creux déterminant la surface extérieure de l'article consommable en forme de coquille avec la masse de graisse à l'état tiède coulant, la température du moule creux étant inférieure à la température de la masse de graisse tiède;
b) introduction d'un élément de poinçon déterminant la surface intérieure de l'article consommable en forme de coquille dans la masse de graisse tiède coulante dans la coquille, la température de l'élément de poinçon étant également inférieure à la température de la masse de graisse tiède, de telle manière que la masse de graisse encore coulante se répartisse dans l'espace intermédiaire entre le moule creux et l'élément de poinçon;
c) maintien de l'élément de poinçon dans sa position introduite dans la masse de graisse pendant une durée déterminée, jusqu'à ce que la masse de graisse soit solidifiée dans l'espace intermédiaire,
**caractérisé par**
d) la sélection d'un des multiples blocs de poinçons; et
e) l'utilisation du bloc de poinçons sélectionné pour au moins un cycle d'étapes, qui présente l'étape a), l'étape b) et l'étape c).

23. Procédé de fabrication d'articles consommables en forme de coquille à partir d'une masse de graisse, en particulier une masse de graisse contenant du cacao ou de type chocolat, dans lequel on utilise un dispositif selon la revendication 21, dans lequel le procédé présente les étapes suivantes d'un cycle d'étapes:
a) remplissage dosé d'un moule creux déterminant la surface extérieure de l'article consommable en forme de coquille avec la masse de graisse à l'état tiède coulant, la température du moule creux étant inférieure à la température de la masse de graisse tiède;
b) introduction d'un élément de poinçon déterminant la surface intérieure de l'article consommable en forme de coquille dans la masse de graisse tiède coulante dans la coquille, la température de l'élément de poinçon étant également inférieure à la température de la masse de graisse tiède, de telle manière que la masse de graisse encore coulante se répartisse dans l'espace intermédiaire entre le moule creux et l'élément de poinçon;
c) maintien de l'élément de poinçon dans sa position introduite dans la masse de graisse pendant une durée déterminée, jusqu'à ce que la masse de graisse soit solidifiée dans l'espace intermédiaire,
**caractérisé par**
d) la sélection d'une des multiples structures échangeables de blocs de poinçons; et
e) l'utilisation de la structure échangeable de blocs de poinçons sélectionnée pour au moins un cycle d'étapes, qui présente l'étape a), l'étape b) et l'étape c).

24. Procédé selon la revendication 22 ou 23, **caractérisé en ce que** l'on utilise un bloc de poinçons sélectionné ou une structure échangeable de blocs de poinçons sélectionnée pendant plusieurs cycles d'étapes.
